# EUROPÄISCHE PATENTANMELDUNG

(11) **EP 4 043 539 A1**
(43) Veröffentlichungstag der Anmeldung: **17.08.2022**
(21) Anmeldenummer: 21156829.0
(22) Anmeldetag: 12.02.2021
(51) Int. Cl.: C10K 1/18, C10B 47/00

(54) **VORRICHTUNG UND VERFAHREN ZUR REINIGUNG UND/ODER KONDENSATION VON PYROLYSEGAS**

(71) Anmelder: Grimm, Bernhard, 97753 Karlstadt (DE); Grimm, Achim, 97753 Karlstadt (DE)
(72) Erfinder: Grimm, Bernhard, 97753 Karlstadt (DE); Grimm, Achim, 97753 Karlstadt (DE)
(74) Vertreter: MERH-IP Matias Erny Reichl Hoffmann Patentanwälte PartG mbB

(57) **Zusammenfassung**

Es wird eine Vorrichtung (100) zur Reinigung und/oder Kondensation von Pyrolysegas aus einem Pyrolysereaktor (101) beschrieben. Die Vorrichtung (100) umfasst eine Leitung (103), die ausgebildet ist, Pyrolysegas aus dem Pyrolysereaktor (101) zu einem Venturiwäscher (104) zu leiten. Des Weiteren umfasst die Vorrichtung (100) den Venturiwäscher (104), der eingerichtet ist, das Pyrolysegas unter Verwendung von Pyrolyseöl als Reinigungsflüssigkeit zumindest teilweise zu reinigen und/oder zu kondensieren.

## Beschreibung

Die Erfindung betrifft ein Verfahren und eine Vorrichtung zur Aufbereitung von Pyrolysegas aus einem Pyrolysereaktor.

Jährlich fallen weltweit große Mengen an Altreifen und/oder Kunststoffen an, die stofflich verwertet werden sollten. Im Rahmen der Verwertung können als Produkte Stahl, Carbon Black bzw. Industrieruß und/oder Pyrolyseöl gewonnen werden. Das Pyrolyseöl kann zu elektrischem Strom umgesetzt oder raffiniert werden. Carbon Black kann als Füllstoff in der Gummiindustrie, hauptsächlich für Fahrzeugreifen und technische Gummiartikel wie Fördergurte, Schläuche und Dichtungsprofile, verwendet werden. Ferner kann Carbon Black als Schwarzpigment in Anwendungen wie Maskara, Graberde, Dekorpapier oder Fasern verwendet werden. Der in Reifen vorliegende Metallanteil kann recycelt werden.

Die o.g. Produkte, insbesondere Carbon Black, können durch Pyrolyse in einem Pyrolysereaktor aus Altreifen und/oder Kunststoffen gewonnen werden. Die Pyrolyse läuft dabei bei einer Temperator von ca. 250-700 °C ab. Als weiteres Produkt bei der Pyrolyse entsteht typischerweise Pyrolysegas, welches frei von Sauerstoff ist und welches meist einen relativ hohen Anteil an kondensierbaren Kohlenwasserstoffen aufweist. Ferner weist das Pyrolysegas meist einen relativ hohen Anteil an Teeren und/oder Staub auf, die zu Betriebsstörungen von nachfolgenden Teilen einer Anlage zur Aufbereitung der Produkte aus einem Pyrolysereaktor führen können.

Das vorliegende Dokument befasst sich mit der technischen Aufgabe, eine besonders effiziente und zuverlässige Reinigung von Pyrolysegas aus einem Pyrolysereaktor zu ermöglichen, insbesondere um die Zuverlässigkeit einer Aufbereitungsanlage von Produkten aus dem Pyrolysereaktor zu erhöhen. Die Aufgabe wird durch jeden der unabhängigen Ansprüche gelöst. Bevorzugte Ausgestaltungen sind in den abhängigen Ansprüchen beschrieben.

Gemäß einem Aspekt wird eine Vorrichtung zur Reinigung und/oder Kondensation von Pyrolysegas aus einem Pyrolysereaktor beschrieben. Das Pyrolysegas kann Kohlenwasserstoffe umfassen, die durch Kondensation in den flüssigen Zustand überführt werden können. Das kondensierte Pyrolysegas kann Pyrolyseöl umfassen, insbesondere sein. Ferner kann das Pyrolysegas Verunreinigungen aufweisen (wie z.B. Teer, Staub und/oder (andere) Feststoffe).

Die Vorrichtung umfasst eine Leitung, die ausgebildet ist, Pyrolysegas aus dem Pyrolysereaktor zu einem Venturiwäscher der Vorrichtung zu leiten. Das Pyrolysegas kann dabei eine Temperatur von 250°C oder mehr aufweisen. Die Leitung kann ggf. geheizt sein, insbesondere um eine Kondensation des Pyrolysegase innerhalb der Leitung zu vermeiden. Alternativ oder ergänzend kann in der Leitung eine mechanische Reinigung-des Pyrolysegases erfolgen.

Die Vorrichtung umfasst ferner den (zumindest einen) Venturiwäscher, der eingerichtet ist, das Pyrolysegas unter Verwendung von Pyrolyseöl als Reinigungsflüssigkeit zumindest teilweise zu reinigen und/oder zu kondensieren. Der Venturiwäscher ist dabei typischerweise ausgebildet, das Pyrolysegas aus dem Pyrolysereaktor zu beschleunigen (in einem konvergenten Teil bis zu der Kehle des Venturiwäschers). Des Weiteren ist der Venturiwäscher typischerweise ausgebildet, das beschleunigte Pyrolysegas mit Pyrolyseöl als Reinigungsflüssigkeit zu vermischen, so dass Pyrolyseöl-Tropfen entstehen, an denen sich Verunreinigungen aus dem Pyrolysegas ablagern. Organische Verunreinigungen werden teilweise durch das Pyrolyseöl aufgelöst.

Die Verwendung eines Venturiwäschers, der mit Pyrolyseöl als Reinigungsflüssigkeit betrieben wird, ermöglicht eine besonders zuverlässige und effiziente Reinigung und/oder Kondensation von Pyrolysegas.

Die Vorrichtung kann einen Sprühwäscher umfassen, der eingerichtet ist, Pyrolysegas aus dem Venturiwäscher aufzunehmen. Die Vorrichtung kann insbesondere ausgebildet sein, das als Reinigungsflüssigkeit verwendete Pyrolyseöl und das zumindest teilweise kondensierte Pyrolysegas (über eine Leitung) von dem Venturiwäscher in den Sprühwäscher zu leiten.

Der Sprühwäscher kann ein oder mehrere Sprühdüsen umfassen, die eingerichtet sind, Pyrolyseöl in den Sprühwäscher zu sprühen, um das in dem Sprühwäscher aufgenommene Pyrolysegas zumindest teilweise zu kondensieren. Ferner kann innerhalb des Sprühwäschers eine weitere Reinigung des Pyrolysegases bewirkt werden. Durch die Verwendung eines zusätzlichen Sprühwäschers können die Reinigung und/oder die Kondensation des Pyrolysegases weiter verbessert werden.

Die Vorrichtung kann ein Temperierungsmodul (insbesondere mit einem Wärmetauscher) umfassen, das ausgebildet ist, die Temperatur des Pyrolyseöls einzustellen (insbesondere zu reduzieren oder ggf. zu erhöhen), das über die ein oder mehreren Sprühdüsen des Sprühwäschers versprüht wird. Die Temperatur kann dabei insbesondere auf eine bestimmte Soll-Temperatur eingestellt werden, um zu bewirken, dass ein bestimmter Ziel-Anteil des Pyrolysegases kondensiert, während ein bestimmter Rest-Anteil des Pyrolysegases in Gasform bestehen bleibt.

Die Vorrichtung kann insbesondere ein Steuermodul umfassen, das eingerichtet ist, in Abhängigkeit von einem Ziel-Anteil von kondensiertem Pyrolysegas an der Gesamtmenge von Pyrolysegas aus dem Pyrolysereaktor eine Soll-Temperatur des Pyrolyseöls zu ermitteln. Das Temperierungsmodul kann dann in Abhängigkeit von der Soll-Temperatur betrieben werden, insbesondere um zu bewirken, dass das Pyrolyseöl an den ein oder mehreren Sprühdüsen die Soll-Temperatur aufweist.

Durch die Einstellung der Temperatur des Pyrolyseöls, das zur Kondensation des Pyrolysegases verwendet wird, kann der Grad der Kondensation des Pyrolysegases in präziser Weise eingestellt werden, um die Güte der Aufbereitung des Pyrolysegases weiter zu erhöhen.

Der Sprühwäscher kann derart ausgebildet sein, dass sich an dem Boden des Sprühwäschers ein (Verunreinigungs-) Sumpf mit Verunreinigungen bildet, die von dem Pyrolyseöl aus dem Pyrolysegas aufgenommen wurden. So können die Verunreinigungen aus dem Pyrolysegas in effizienter Weise gesammelt werden.

Der Sprühwäscher kann einen Austritt aufweisen, über den die Verunreinigungen aus dem Verunreinigungs-Sumpf am Boden des Sprühwäschers aus dem Sprühwäscher geleitet werden können. Des Weiteren kann die Vorrichtung einen (weiteren) Austritt an einer Stelle oberhalb des Verunreinigungs-Sumpfes aufweisen, der es ermöglicht, (reines bzw. gereinigtes) Pyrolyseöl aus dem Sprühwäscher zu leiten. So kann in zuverlässiger Weise hochwertiges Pyrolyseöl bereitgestellt werden.

Die Vorrichtung kann eine Ölpumpe umfassen, die eingerichtet ist, über eine Leitung Pyrolyseöl aus dem Sprühwäscher, insbesondere von einer Stelle oberhalb des Verunreinigungs-Sumpfes am Boden des Sprühwäschers, zu dem Venturiwäscher zu leiten. Alternativ oder ergänzend kann die Vorrichtung eine (weitere) Ölpumpe umfassen, die eingerichtet ist, über eine Leitung und insbesondere über das Temperierungsmodul Pyrolyseöl aus dem Sprühwäscher, insbesondere von einer Stelle oberhalb des Verunreinigungs-Sumpfes am Boden des Sprühwäschers, zu den ein oder mehreren Sprühdüsen zu leiten. Es können somit ein oder mehrere Kreisläufe für Pyrolyseöl bereitgestellt werden, die über den Sprühwäscher verlaufen. So kann eine besonders effiziente Vorrichtung zur Reinigung und/oder Kondensation von Pyrolysegas bereitgestellt werden.

Die Vorrichtung kann eine Brennkammer zur Verbrennung von nicht-kondensiertem Pyrolysegas umfassen. Des Weiteren kann die Vorrichtung eingerichtet sein, dem Pyrolysereaktor thermische Energie aus der Verbrennung von nicht-kondensiertem Pyrolysegas bereitzustellen. Beispielsweise kann die Vorrichtung eine Heizeinrichtung umfassen, die eingerichtet ist, den Pyrolysereaktor und/oder Material in dem Pyrolysereaktor zu erwärmen. Ferner kann die Vorrichtung eine Leitung umfassen, die ausgebildet ist, bei der Verbrennung von nicht-kondensiertem Pyrolysegas entstandenes Rauchgas aus der Brennkammer zu der Heizeinrichtung zu leiten. Durch die Verwendung des restlichen (nicht-kondensierten) Pyrolysegases zum Heizen des Pyrolysereaktors kann die Effizienz der Vorrichtung weiter erhöht werden.

Die Vorrichtung kann ein Modul zur Rückgewinnung von Restwärme aus dem Rauchgas und/oder ein Modul zur Reinigung des Rauchgases umfassen. So können die Effizienz und die Umweltverträglichkeit der Vorrichtung weiter erhöht werden.

Gemäß einem weiteren Aspekt wird ein Verfahren zur Reinigung und/oder Kondensation von Pyrolysegas aus einem Pyrolysereaktor beschrieben. Das Verfahren umfasst das Leiten von Pyrolysegas aus dem Pyrolysereaktor zu einem Venturiwäscher. Des Weiteren umfasst das Verfahren das Reinigen und/oder Kondensieren zumindest eines Teils des Pyrolysegases in dem Venturiwäscher unter Verwendung von Pyrolyseöl als Reinigungsflüssigkeit (das von dem beschleunigten Pyrolysegas in dem Venturiwäscher zerstäubt wird).

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigt
Fig. 1 eine beispielhafte Reinigungs- und/oder Kondensationsvorrichtung für Pyrolysegas aus einem Pyrolysereaktor; und
Fig. 2 ein Ablaufdiagramm eines beispielhaften Verfahrens zur Reinigung und/oder Kondensation von Pyrolysegas aus einem Pyrolysereaktor.

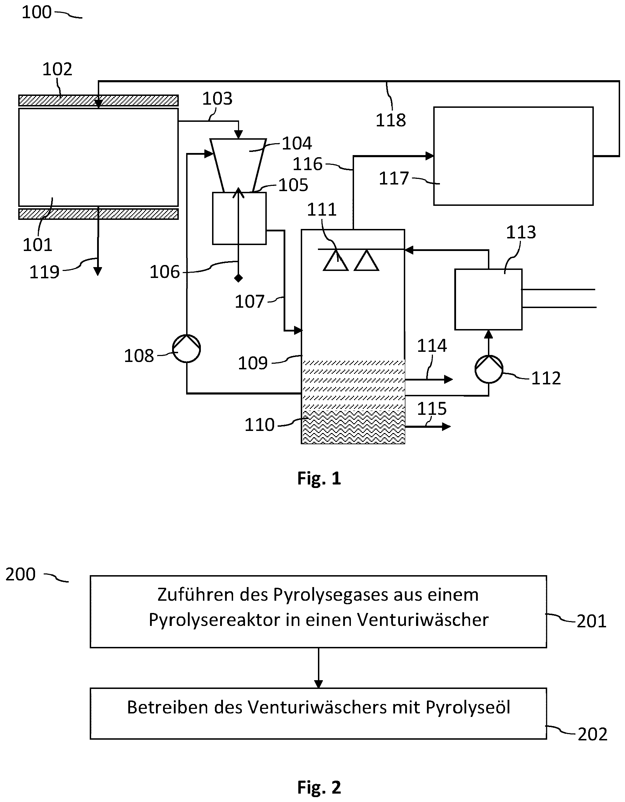

Wie eingangs dargelegt, befasst sich das vorliegende Dokument mit der effizienten und umfassenden Reinigung und/oder Kondensation von Pyrolysegas aus einem Pyrolysereaktor. In diesem Zusammenhang zeigt Fig. 1 eine beispielhafte Reinigungsvorrichtung 100 zur Reinigung und/oder Kondensation von Pyrolysegas aus einem Pyrolysereaktor 101. Der Pyrolysereaktor 101 weist typischerweise eine Heizeinrichtung 102 auf, die eingerichtet ist, das Ausgangsmaterial, z.B. Altreifen und/oder Kunststoffe, in dem Pyrolysereaktor 101 zu erhitzen. Das Ausgangsmaterial wird dann unter Einwirkung von thermischer Energie, ohne Kontakt mit Sauerstoff, zersetzt. Typische Produkte aus dem Pyrolysereaktor 101 sind ein festes rußhaltiges Material und/oder Pyrolysegas (das meist ein Synthesegas ist).

Das Pyrolysegas kann über einen Austritt und/oder über eine Leitung 103 direkt von dem Pyrolysereaktor 101 in einen Venturiwäscher 104 geleitet werden, wobei der Venturiwäscher 104 eingerichtet ist, das Pyrolysegas zu reinigen und/oder zu kondensieren. Insbesondere können innerhalb des Venturiwäschers 104 Teerbestandteile und/oder Staub (d.h. Feststoffe) aus dem Pyrolysegas entfernt werden. Ferner kann das eigentliche Pyrolysegas zumindest teilweise zu flüssigem Pyrolyseöl kondensiert werden. Ein Vorteil der Benutzung des Pyrolyseöls als Waschflüssigkeit ist auch, dass kohlenwasserstoffhaltige Verunreinigungen in der Waschflüssigkeit gelöst werden.

Der Venturiwäscher 104 weist einen konvergenten Teil (mit sich reduzierendem Querschnitt) auf, der in einer Kehle 105 des Venturiwäschers 104 mündet. Im Anschluss an die Kehle 105 erfolgt die Kondensation des (gereinigten) Pyrolysegases erfolgen kann. Das Pyrolysegas wird in dem konvergenten Teil des Venturiwäschers 104 beschleunigt. An oder vor der Kehle 105 wird eine Reinigungsflüssigkeit zu dem beschleunigten Pyrolysegas zugegeben, wobei die Reinigungsflüssigkeit aufgrund der hohen Geschwindigkeit des Pyrolysegases Tropfen bildet, an denen sich die Feststoffe (d.h. die Verunreinigungen) aus dem Pyrolysegas binden können. Die mit Feststoffen beladenen Tropfen können z.B. in einem (Fliehkraft-) Abscheider (nicht dargestellt) gereinigt werden, um gereinigtes Pyrolyseöl bereitzustellen. Alternativ kann das verunreinigte Pyrolyseöl, wie in Fig. 1 dargestellt, in einem Sprühwäscher 109 weiterverarbeitet werden. Der Venturiwäscher 104 kann eine Verstelleinrichtung 106 zur Verstellung der Kehle 105, insbesondere der Querschnittsgröße der Kehle 105, aufweisen. Als Reinigungsflüssigkeit in dem Venturiwäscher 104 wird bevorzugt Pyrolyseöl verwendet.

Die Reinigungsvorrichtung 100 umfasst einen Sprühwäscher und/oder Kondensator 109, der eingerichtet ist, das gereinigte (ggf. vorkondensierte) Pyrolysegas aus dem Venturiwäscher 104 zu kondensieren. Das gereinigte Pyrolysegas kann (ggf. vermischt mit Pyrolyseöl) über eine Leitung 107 in den Sprühwäscher und/oder Kondensator 109 (d.h. in einen Innenraum des Sprühwäschers und/oder Kondensators 109) geleitet werden. In dem Kondensator 109 (d.h. in dem Innenraum des Kondensators 109) kann anhand von ein oder mehreren Sprühdüsen 111 ein Nebel aus Pyrolyseöl erzeugt werden, wobei das Pyrolysegas an den Pyrolyseöl-Tropfen in dem Innenraum des Kondensators 109 kondensieren und auf den Boden des (Innenraums des) Kondensators 109 fallen kann. Verunreinigungen (insbesondere Festkörper aus dem Pyrolysegas) können sich direkt am Boden als Sprühwäschersumpf 110 absetzen. Die Verunreinigungen 115 können aus diesem Bereich des (Innenraums des) Sprühwäschers und/oder Kondensators 109 abgezogen werden.

Über dem Sumpf 110 bildet sich eine Schicht aus (gereinigtem) Pyrolyseöl. Das Pyrolyseöl kann mittels einer Ölpumpe 108 aus dem Sprühwäscher und/oder Kondensator 109 als Reinigungsflüssigkeit zu dem Venturiwäscher 104 gepumpt werden. Des Weiteren kann das Pyrolyseöl mittels einer Ölpumpe 112 aus dem Sprühwäscher und/oder Kondensator 109 zu den ein oder mehreren Sprühdüsen 111 gepumpt werden. Dabei kann das Pyrolyseöl durch eine Wärmetauscher 113 geleitet werden, in dem das Pyrolyseöl gekühlt wird. Ferner kann gereinigtes Pyrolyseöl über eine Abzug 114 aus dem Sprühwäscher und/oder Kondensator 109 entnommen werden.

In dem Sprühwäscher und/oder Kondensator 109 erfolgt ggf. keine vollständige Kondensation des Pyrolysegases. Das verbliebene Pyrolysegas kann über einen Abzug 116 aus dem Sprühwäscher und/oder Kondensator 109 in eine Brennkammer 117 geleitet werden, in der das verbliebene Pyrolysegas verbrannt wird. Die dabei entstehende thermische Energie kann dazu genutzt werden, den Pyrolysereaktor 101 zu erwärmen. Insbesondere kann bei der Verbrennung entstandenes (heißes) Rauchgas 119 über eine Leitung 118 zu der Heizeinrichtung 102 des Pyrolysereaktors 101 geleitet werden, um den Pyrolysereaktor 101 zu erwärmen.

Es wird somit eine Vorrichtung 100 zur Pyrolysegasreinigung und/oder zur Pyrolysegaskondensation beschrieben. Das bei der Pyrolysereaktion entstehende Pyrolysegas (insbesondere Synthesegas) wird dabei aus dem Pyrolysereaktor 101 über eine (möglichst kurze) Leitung 103 abgezogen. Diese Leitung 103 kann zusätzlich beheizt sein (insbesondere um eine Kondensation in der Leitung 103 zu verhindern). Ferner kann die Leitung 103 eine mechanische Reinigungseinrichtung (insbesondere zur mechanischen Abtrennung von Feststoffen aus dem Pyrolysegas) aufweisen.

Das abgezogene Pyrolysegas wird mittels ein oder mehrerer Venturiwäscher 104 (zumindest teilweise) kondensiert und gleichzeitig von Teerbestandteilen und Staub (Feststoffen) gereinigt. Als Wasch- und Kondensationsflüssigkeit kann Pyrolyseöl verwendet werden.

Der Reinigungseffekt in dem Venturiwäscher 104 kann insbesondere dadurch zustande kommen, dass das Pyrolysegas zusammen mit dem Pyrolyseöl bei hoher Geschwindigkeit durch die Venturikehle 105 strömt. Dadurch wird eine effektive Abscheidung von Teeren und Feststoffen aus dem Pyrolysegas in die Waschflüssigkeit (d.h. in das Pyrolyseöl) erreicht. Die Venturikehle 105 und damit der Spalt für die Durchströmung kann mittels einer Verstelleinrichtung 106 einstellbar sein.

Der Reinigungseffekt in dem Venturiwäscher 104 führt dazu, dass das Pyrolysegas weitgehend störungsfrei weiterverarbeitet werden kann. Dies trägt wesentlich zur Betriebssicherheit und Stabilität des Pyrolyseverfahrens bei.

Das in dem Venturiwäscher 104 vorkondensierte Pyrolysegas kann in einem Sprühkühler (Kondensator) bzw. Sprühwäscher 109 auf eine eingestellte Kondensationstemperatur gebracht werden, so dass weiteres Pyrolyseöl auskondensiert. Der Sprühwäscher 109 wird dabei mit Pyrolyseöl betrieben. Die Kondensationstemperatur kann dadurch eingestellt werden, dass das durch die Kondensation erzeugte Pyrolyseöl über einen Wärmetauscher (insbesondere über einen Kühler) 113 auf die gewünschte Kondensationstemperatur gekühlt wird. Über die Kondensationstemperatur kann eingestellt werden, wieviel Pyrolyseöl und wieviel restliches Pyrolysegas bereitgestellt wird. Mit anderen Worten, über die Kondensationstemperatur kann das Verhältnis aus verbleibendem Pyrolysegas und kondensiertem Pyrolyseöl eingestellt werden.

Das Pyrolyseöl kann durch ein Ölpumpensystem 108 zu dem Venturiwäscher 104 gepumpt werden. Von dem Venturiwäscher 104 läuft das (verunreinigte) Pyrolyseöl dann zurück zu dem Sumpf 110 des Sprühwäschers 109.

Ferner kann das Pyrolyseöl durch ein Ölpumpensystem 112 zu den ein oder mehreren Sprühdüsen 111 des Kondensators bzw. Sprühwäschers 109 gepumpt werden. An den ein oder mehreren Sprühdüsen 111 wird das Pyrolyseöl verteilt, um eine weitere Kondensation des Pyrolysegases zu bewirken. In den Ölkreislauf kann ein Wärmetauscher (Kühler) 113 geschaltet werden, mit dem die Kondensationstemperatur eingestellt werden kann.

Das (jeweils zurückgeführte) Pyrolyseöl wird im Sumpf 110 des Sprühwäschers 109 gesammelt. Der Sumpf 110 des Sprühwäschers 109 kann derart gestaltet sein, dass am Boden des Sprühwäschers 109 ein Absetzeffekt von Verunreinigungen des Pyrolyseöls erfolgt. Diese Verunreinigungen können dann aus dem unteren Bereich des Sumpfes 110 über einen Abzug 115 abgezogen werden.

Das über einen Abzug 114 abgezogene (gereinigte) Pyrolyseöl kann mit oder ohne weitere Bearbeitungsschritte einer Nutzung zugeführt werden. Das nicht kondensierte Pyrolysegas kann am Kopf des Sprühwäschers 109 über einen Abzug 116 abgezogen und in einer Brennkammer 117 verbrannt werden. Das in der Brennammer 17 erzeugte heiße Rauchgas 119 kann zur Beheizung von ein oder mehreren Pyrolysereaktoren 101 verwendet werden. Beispielsweise kann die Heizeinrichtung 102 eines Pyrolysereaktors 101 mit dem Rauchgas 119 beheizt werden. Die restliche thermische Energie aus dem Rauchgas 119 kann in einem Wärmerückgewinnungschritt zurückgewonnen werden, in dem das Rauchgas 119 heruntergekühlt wird. Ferner kann das Rauchgas 119 von Schadstoffen gereinigt werden.

Fig. 2 zeigt ein Ablaufdiagramm eines beispielhaften Verfahrens 200 zur Reinigung und/oder Kondensation von Pyrolysegas aus einem Pyrolysereaktor 101. Das Pyrolysegas kann dabei kondensierbare Kohlenwasserstoffe aufweisen.

Das Verfahren 200 umfasst das Leiten 201 von Pyrolysegas aus dem Pyrolysereaktor 101 (über eine Leitung 103) zu einem Venturiwäscher 104. Des Weiteren umfasst das Verfahren 200 das Reinigen und/oder Kondensieren 202 zumindest eines Teils des Pyrolysegases in dem Venturiwäscher 104 unter Verwendung von Pyrolyseöl als Reinigungsflüssigkeit. Der kondensierte Teil des Pyrolysegases kann dabei selbst Pyrolyseöl bilden.

Durch die in diesem Dokument beschriebenen Maßnahmen kann eine besonders effiziente und sichere Reinigung und/oder Aufbereitung von Pyrolysegas aus einem Pyrolysereaktor 101 bewirkt werden. Dies wird insbesondere durch die Verwendung eines Venturiwäschers 104 ermöglicht, der Pyrolyseöl als Reinigungsflüssigkeit nutzt, die in dem Venturiwäscher 104 dem beschleunigten Pyrolysegas zugeführt wird.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Vorrichtung (100) zur Reinigung und/oder Kondensation von Pyrolysegas aus einem Pyrolysereaktor (101); wobei die Vorrichtung (100) umfasst,
- eine Leitung (103), die ausgebildet ist, Pyrolysegas aus dem Pyrolysereaktor (101) zu einem Venturiwäscher (104) zu leiten; und
- den Venturiwäscher (104), der eingerichtet ist, das Pyrolysegas unter Verwendung von Pyrolyseöl als Reinigungsflüssigkeit zumindest teilweise zu reinigen und/oder zu kondensieren.

2. Vorrichtung (100) gemäß Anspruch 1, wobei
- die Vorrichtung (100) einen Sprühwäscher (109) umfasst, der eingerichtet ist, Pyrolysegas aus dem Venturiwäscher (104) in dem Sprühwäscher (109) aufzunehmen; und
- der Sprühwäscher (109) ein oder mehrere Sprühdüsen (111) umfasst, die eingerichtet sind, Pyrolyseöl in dem Sprühwäscher (109) zu versprühen, um das in dem Sprühwäscher (109) aufgenommene Pyrolysegas zumindest teilweise zu kondensieren.

3. Vorrichtung (100) gemäß Anspruch 2, wobei
- die Vorrichtung (100) ein Temperierungsmodul (113) umfasst, das ausgebildet ist, die Temperatur des Pyrolyseöls einzustellen, das über die ein oder mehreren Sprühdüsen (111) des Sprühwäschers (109) versprüht wird; und
- das Temperierungsmodul (113) insbesondere einen Wärmetauscher umfasst.

4. Vorrichtung (100) gemäß Anspruch 3, wobei die Vorrichtung (100) ein Steuermodul umfasst, das eingerichtet ist,
- in Abhängigkeit von einem Ziel-Anteil von kondensiertem Pyrolysegas an einer Gesamtmenge von Pyrolysegas aus dem Pyrolysereaktor (101) eine Soll-Temperatur des Pyrolyseöls zu ermitteln; und
- das Temperierungsmodul (113) in Abhängigkeit von der Soll-Temperatur zu betreiben.

5. Vorrichtung (100) gemäß einem der Ansprüche 2 bis 4, wobei
- der Sprühwäscher (109) derart ausgebildet ist, dass sich an einem Boden des Sprühwäschers (109) ein Sumpf (110) mit Verunreinigungen bildet, die von dem Pyrolyseöl aus dem Pyrolysegas aufgenommen wurden; und
- der Sprühwäscher (109) insbesondere einen Austritt (115) aufweist, über den die Verunreinigungen am Boden des Sprühwäschers (109) aus dem Sprühwäscher (109) geleitet werden können.

6. Vorrichtung (100) gemäß Anspruch 5, wobei die Vorrichtung (100) einen Austritt (114) an einer Stelle oberhalb des Verunreinigungs-Sumpfes (110) aufweist, der es ermöglicht, Pyrolyseöl aus dem Sprühwäscher (110) zu leiten.

7. Vorrichtung (100) gemäß einem der Ansprüche 2 bis 6, wobei die Vorrichtung (100) eine Ölpumpe (108) umfasst, die eingerichtet ist, über eine Leitung Pyrolyseöl aus dem Sprühwäscher (109), insbesondere von einer Stelle oberhalb eines Verunreinigungs-Sumpfes (110) an einem Boden des Sprühwäschers (110), zu dem Venturiwäscher (104) zu leiten.

8. Vorrichtung (100) gemäß einem der Ansprüche 2 bis 7, wobei die Vorrichtung (100) eine Ölpumpe (112) umfasst, die eingerichtet ist, über eine Leitung und insbesondere über ein Temperierungsmodul (113) Pyrolyseöl aus dem Sprühwäscher (109), insbesondere von einer Stelle oberhalb eines Verunreinigungs-Sumpfes (110) an einem Boden des Sprühwäschers (110), zu den ein oder mehreren Sprühdüsen (111) zu leiten.

9. Vorrichtung (100) gemäß einem der Ansprüche 2 bis 8, wobei die Vorrichtung (100) ausgebildet ist, das als Reinigungsflüssigkeit verwendete Pyrolyseöl und das zumindest teilweise kondensierte Pyrolysegas von dem Venturiwäscher (104) in den Sprühwäscher (109) zu leiten.

10. Vorrichtung (100) gemäß einem der vorhergehenden Ansprüche, wobei
- die Vorrichtung (100) eine Brennkammer (117) zur Verbrennung von nicht-kondensiertem Pyrolysegas umfasst; und
- die Vorrichtung (100) eingerichtet ist, dem Pyrolysereaktor (101) thermische Energie aus der Verbrennung von nicht-kondensiertem Pyrolysegas bereitzustellen.

11. Vorrichtung (100) gemäß Anspruch 10, wobei die Vorrichtung (100) umfasst,
- eine Heizeinrichtung (102), die eingerichtet ist, den Pyrolysereaktor (101) und/oder Material in dem Pyrolysereaktor (101) zu erwärmen; und
- eine Leitung (118), die ausgebildet ist, bei der Verbrennung von nicht-kondensiertem Pyrolysegas entstandenes Rauchgas (119) aus der Brennkammer (117) zu der Heizeinrichtung (102) zu leiten.

12. Vorrichtung (100) gemäß Anspruch 11, wobei die Vorrichtung (100) ein Modul zur Rückgewinnung von Restwärme aus dem Rauchgas (119) und/oder ein Modul zur Reinigung des Rauchgases (119) umfasst.

13. Vorrichtung (100) gemäß einem der vorhergehenden Ansprüche, wobei der Venturiwäscher (104) ausgebildet ist,
- das Pyrolysegas aus dem Pyrolysereaktor (101) zu beschleunigen; und
- das beschleunigte Pyrolysegas mit Pyrolyseöl als Reinigungsflüssigkeit zu vermischen, so dass Pyrolyseöl-Tropfen entstehen, an denen sich Verunreinigungen aus dem Pyrolysegas ablagern.

14. Vorrichtung (100) gemäß einem der vorhergehenden Ansprüche, wobei das kondensierte Pyrolysegas Pyrolyseöl umfasst, insbesondere ist.

15. Verfahren (200) zur Reinigung und/oder Kondensation von Pyrolysegas aus einem Pyrolysereaktor (101); wobei das Verfahren (200) umfasst,
- Leiten (201) von Pyrolysegas aus dem Pyrolysereaktor (101) zu einem Venturiwäscher (104); und
- Reinigen und/oder Kondensieren (202) zumindest eines Teils des Pyrolysegases in dem Venturiwäscher (104) unter Verwendung von Pyrolyseöl als Reinigungsflüssigkeit.
